# EUROPÄISCHE PATENTANMELDUNG

(11) **EP 2 476 889 A2**
(43) Veröffentlichungstag der Anmeldung: **18.07.2012**
(21) Anmeldenummer: 12000127.6
(22) Anmeldetag: 11.01.2012
(51) Int. Cl.: F02M 37/00, F02D 19/08

(54) **Verbrennungsmotor mit Drittmedieneinspeisung**

(30) Priorität: 12.01.2011 DE 102011008331
(71) Anmelder: Meyer, Karl, 90596 Schwanstetten (DE); Aumüller-Karger, Claudia, 90596 Schwanstetten (DE)
(72) Erfinder: Meyer, Karl, 90596 Schwanstetten (DE); Aumüller-Karger, Claudia, 90596 Schwanstetten (DE)
(74) Vertreter: Pöhner, Wilfried Anton

(57) **Zusammenfassung**

Verbrennungsmotor, bestehend aus einem Motorblock (1) mit wenigstens einem Hohlraum (11), in dem je ein dazu teilweise komplementär geformter Kolben (2) bewegbar angeordnet ist, der mit einer drehbaren Abtriebswelle (3) mechanisch verbunden ist und der während seiner Bewegung einen Teil des Hohlraums (11), den Verbrennungsraum, zyklisch vergrößert und verkleinert, wobei in den Verbrennungsraum ein zündfähiges Gemisch aus einem Treibstoff (4) und Luft (5) und wenigstens einem Drittmedium (6) einbringbar, verdichtbar, zündbar und nach der Verbrennung wieder ausstoßbar ist und wobei der Treibstoff (4) und die Drittmedien (6) in einem Mischer innig miteinander vermischbar sind und das entstandene Gemisch von einer Vorförderpumpe (73) ansaugbar ist und einer Einspritzpumpe (74) zuführbar ist, von der es durch wenigstens eine Einspritzdüse (75) in den Verbrennungsraum (12) einspritzbar ist.

## Beschreibung

Die Erfindung bezieht sich auf einen Verbrennungsmotor, bestehend aus einem Motorblock mit wenigstens einem Hohlraum, in dem je ein dazu teilweise komplementär geformter Kolben bewegbar angeordnet ist, der mit einer drehbaren Abtriebswelle mechanisch verbunden ist und der während seiner Bewegung einen Teil des Hohlraums, den Verbrennungsraum, zyklisch vergrößert und verkleinert, wobei in den Verbrennungsraum ein zündfähiges Gemisch aus einem Treibstoff und Luft und wenigstens einem Drittmedium einbringbar, verdichtbar, zündbar und nach der Verbrennung wieder ausstoßbar ist.

Auf aktuellem Stand der Technik sind Verbrennungsmotoren - z.B. in Kraftfahrzeugen - millionenfach im Einsatz. Ein Verbrennungsmotor ist eine Wärmekraftmaschine, in der die chemische Energie eines Treibstoffs durch Verbrennung direkt in mechanische Arbeit umgewandelt wird. Zur Verbrennung wird ein Gemisch aus Treibstoff und Umgebungsluft in einem Verbrennungsraum des Motors gezündet, wodurch ein heißes Gas entsteht. Dessen Wärmeausdehnung bewegt jeweils einen Kolben, der mechanisch mit einer Abtriebswelle verbunden ist und sie durch seine Bewegung in Drehung versetzt.

Am weitesten verbreitet ist der Hubkolbenmotor, bei dem sich die Kolben linear und reversierend in einem Zylinder bewegen und über eine Pleuelstange und einen Kurbelzapfen mit der Abtriebswelle verbunden sind.

Genutzt werden aber auch Drehkolbenmotoren wie z.B. der Wankelmotor, bei denen der Kolben auf einer Umlaufbahn rotiert und auch Zahnräder die Kolben mit der Abtriebswelle verbinden.

Als Treibstoff dienen Benzin, Diesel oder andere Kohlenwasserstoffgemische, die in den Ansaugstutzen vor dem Verbrennungsraum oder direkt in den Verbrennungsraum eingespritzt werden und sich dort mit Luft vermischen. Das Gemisch wird verdichtet und dann durch Fremdzündung oder Eigenzündung gezündet und verbrannt. Das entstehende Gas expandiert und bewegt den Kolben. Anschließend wird es ausgestoßen.

Für derartige Verbrennungsmotoren ist - u.a. zur Leistungssteigerung - die sog. Wassereinspritzung bekannt. Ein derartiges Verfahren beschreibt u.a. die OS DE 32 28 836. Dabei wird im stationären Betriebszustand eines Verbrennungsmotors in dessen Ansaugtrakt Wasser in die Verbrennungsluft eingespritzt.

Das eingespritzte Wasser verdampft bei der Verbrennung des Treibstoffes, wofür Verdampfungswärme aufzubringen ist, durch deren Abgabe sowohl das Innere der Maschine als auch die Verbrennungsluft sehr effektiv gekühlt werden. In Folge der höheren Dichte der Verbrennungsluft wird die vom Motor maximal abgebbare Leistung erhöht.

Ein weiterer Vorteil der Wassereinspritzung ist, dass innerhalb des Verbrennungszyklus das brennfähige Gemisch früher gezündet werden kann, da die kühlere Verbrennungsluft das Risiko des sog. Klopfens" oder "Nagelns" vermindert. Das Klopfen oder Nageln ist eine unkontrollierte explosionsartige Selbstentzündung des Treibstoff-Luft-Gemisches. Dabei steigen Temperatur und Druck schlagartig an und es entstehen Druckwellen, die sich mit Schallgeschwindigkeit im Brennraum ausbreiten. Durch Reflexion an den Wänden des Verbrennungsraumes kann es zu hochfrequenten Schwingungen im Zylinderdruckverlauf kommen bis hin zu Druckspitzen, die Kolben, Lager und Zylinderkopf beschädigen können.

Durch die insgesamt kühlere Verbrennung wird das Risiko der Bildung von Stickoxiden (NOx) reduziert, die ein besonders schädliches Umweltgift sind.

Vorteilhaft ist auch die Reduzierung des Rußanteils im Abgas von Dieselmotoren, da der Wasserdampf an fast allen Punkten des Verbrennungsraumes eine ausreichende Menge von Sauerstoff bereithält, so dass fast alle Moleküle des Dieseltriebstoffes vollständig in Co₂ und H₂O umgewandelt werden.

Daraus folgen als weitere, derzeit sehr hoch bewertete Vorzüge die insgesamt bessere Verbrennung des Treibstoffes und dadurch eine Reduzierung des Verbrauches.

Ein massiver Nachteil der Wassereinspritzung ist jedoch, dass die genannten Vorteile nur dann erreicht werden, wenn das eingespritzte Wasser sich ganz homogen mit dem Treibstoff vermischt hat. Wenn sich hingegen das Wasser im Verbrennungsraum zu größeren Tröpfchen zusammenballt, dann wandeln sich die beschriebenen Vorteile der Wassereinspritzung in Nachteile um:

Da Wasser weder brennbar noch mit Kohlenwasserstoffen wie Benzin und Diesel dauerhaft vermischbar ist, setzt im Bereich solcher Tröpfchen die Verbrennung aus. Das führt zu den bereits als "Klopfen" und "Nageln" beschriebenen Effekten einer unvollständigen, unkontrollierten und folglich schadstoffbehafteten und geräuschvollen Verbrennung, die zudem noch die Lebensdauer des Motors verkürzt.

Im Extremfall einer dauerhaft ungleichmäßigen Verteilung des eingespritzten Wassers ist im Vergleich zu Motoren ohne Wassereinspritzung sogar der Schadstoffausstoß höher und die Verbrennung ungleichmäßiger.

Diese nachteiligen Effekte werden verstärkt, wenn als Treibstoff Pflanzenöle verwendet werden, die Bestandteile enthalten, die zur Zusammenballung neigen.

Wenn als Treibstoff Diesel verwendet wird, dem Wasser zugesetzt wird, so verbinden sich diese beiden Bestandteile nicht miteinander, da Wasser aus polaren Molekühlen besteht, Diesel hingegen aus unpolaren Molekühlen, die sich durch chemische oder andere Kräfte nicht direkt mit polaren Molekülen verbinden lassen. Sie können nur miteinander zu einer Emulsion verbunden werden, bei der das Wasser - die "innere Phase" oder auch "disperse Phase"- kleine Tröpfchen bildet, die im Diesel - der "äußeren Phase" oder "kontinuierlichen Phase" - verteilt sind. Sobald die kleinen Tröpfchen der dispersen Phase auf andere Tröpfchen auftreffen, vereinigen sie sich sofort miteinander zu größeren Tröpfchen, da deren äußere Spannung in der Summe geringer als zuvor ist. Deshalb existiert eine solche Emulsion ohne weiteres Zutun von außen nur für sehr kurze Zeit und trennt sich alsbald wieder in Wasser im unteren Teil des Tanks und darauf schwimmendem Diesel im oberen Teil des Tanks.

Als eine Alternative zur dauerhaften Vermischung von Treibstoff und Wasser für Verbrennungsmotoren schlägt die WO 2010/133625 die Beimischung von ionischen und nichtionischen Tensidkomponenten vor, die die vorzeitige und kontinuierliche Zusammenballung der kleinen und kleinsten Wassertropfen zu immer größeren Tropfen verhindert. Ein derart mit Tensiden versehener Treibstoff kann entweder als fertige Mischung gelagert oder erst kurz vor der Verbrennung mit Wasser gemischt werden.

Es bleibt der wesentliche Nachteil, dass sich die chemische Zusammensetzung des Treibstoffes ändert und ein erhöhter Aufwand für die Kosten und die erforderliche Energie bei der Herstellung und Bereithaltung in Kauf genommen werden muss.

Auf diesem Hintergrund stellt sich die Erfindung die Aufgabe, für Verbrennungsmotoren eine Vorrichtung zur innigen Vermischung des Treibstoffes mit Wasser und/oder anderen hinzu zu mischenden, dritten Medien zu entwickeln, bei der keine chemischen Zusätze erforderlich sind.

Als Lösung präsentiert die Erfindung, dass der Treibstoff und die Drittmedien in einem Mischer innig miteinander vermischbar sind und das entstandene Gemisch von einer Vorförderpumpe ansaugbar ist und einer Einspritzpumpe zuführbar ist, von der es durch wenigstens eine Einspritzdüse in den Verbrennungsraum einspritzbar ist.

Ein entscheidendes Merkmal der Erfindung ist also, dass - anders als bisher - die Vermischung des Treibstoffes mit den Drittmedien nicht erst zusammen mit der Vermischung mit dem zweiten Medium - der Verbrennungsluft - erfolgt, sondern zu einem früheren Zeitpunkt und an einem weiter vom Verbrennungsraum entfernten Ort. Dadurch stehen für die Gemischbildung eine längere Zeit und ein größerer Raum als bisher zur Verfügung.

Statt - wie bisher - die Gemischbildung ausschließlich dem Luftstrom hinter der Einspritzdüse zu überlassen, sieht die Erfindung eine externe Mischung vor.

Der Mischer hat nach außen hin die Gestalt einer T-förmigen Rohrverbindung, welche die Leitung für den Treibstoff und die Leitung für das Drittmedium zusammenführt und aus der eine Leitung für die Emulsion wieder herausführt.

In das Innere des Mischers sind verschiedene Vorrichtungen eingebaut, die je nach Ausbaustufe einen unterschiedlich hohen Grad der Vermischung bewirken.

In einer relativ einfachen Ausführungsform ist im Mischer quer zur Strömungsrichtung eine Prallplatte angeordnet, auf welche der Treibstoff und die Drittmedien aufprallen und sich beim Abströmen vom Rand der Prallplatte miteinander zu einer Emulsion vermischen.

In einer aufwendigeren Variante besteht der Mischer aus wenigstens einer Düse, aus der beide Medien auf einen Verteilkegel gesprüht werden, an dessen Fuß zahlreiche Öffnungen angeordnet sind. Vorzugsweise sollte der Strom der Medien zentrisch auf den Verteilkegel auftreffen, so dass er sich gleichmäßig auf dessen Oberfläche verteilt. Von dort aus strömt er in die Öffnungen am Fuß des Kegels. Durch den Übergang von der annähernd laminaren Strömung auf der Kegelfläche in die zahlreichen Öffnungen werden die Medien verwirbelt, wodurch sie sich weiter vermischen.

Der Grad der Vermischung kann gesteigert werden, indem mehrere solcher Prallplatten und/oder Verteilkegel kaskadisch hintereinander aufgereiht werden.

In einer anderen oder zusätzlichen Variante wird die Zuleitung für eines der beiden Medien auf mehrere, kleinere Leitungen verzweigt, die jeweils in die Leitung des anderen Mediums einzeln eingespeist werden. Vorzugsweise sind für diese Einzelleitungen des ersten Mediums die Eintrittstellen in die Leitung für das zweite Medium gleichmäßig über deren Umfang verteilt.

Als eine weitere Verfeinerung kann der Querschnitt der Leitung des zweiten Mediums innerhalb des Mischers vergrößert werden. Dadurch reduziert sich die Fließgeschwindigkeit des zweiten Mediums an dieser Stelle, so dass sich das schräg oder senkrecht zur Fließrichtung eingespeiste, erste Medium weiter im zweiten Medium verteilt.

Dieses Mischverfahren kann mit dem erstgenannten kombiniert werden, indem bei der Eintrittsstelle jeder Einzelleitung eine einzelne Prallplatte oder ein Prallring angeordnet wird

Zusätzlich zu den verschiedenen Ausführungen des Mischers schlägt die Erfindung noch andere Maßnahmen vor, die die Vermischung der beiden Medien weiter verstärken. So können z.B. der Treibstoff und/oder das Drittmedium unter Druck in den Mischer gepresst werden. In praktischen Versuchen sind Druckerhöhungen auf bis zu 300 bar erprobt worden. Aber auch noch höhere Werte sind je nach den verwendeten Medien sinnvoll. Dadurch wird die Wirkung der hydrodynamischen oder aerodynamischen Vermischungsvorrichtungen im Mischer verstärkt.

Eine weitere Mischungshilfe ist die Erhöhung der Temperatur. Dadurch kann sich die Viskosität eines Mediums erhöhen. Bei ungleichen Temperaturen der beiden Medien können deren ungleiche spezifische Gewichte die Wirkung des Mischers verstärken.

Wenn wenigstens eines der beiden Medien so stark erhitzt wird, das es in den gasförmigen Zustand übergeht, wird allein schon dadurch die Mischung mit dem anderen Medium verstärkt. Je nach den Strömungsgeschwindigkeiten im Mischer können Mischungseinrichtungen wie Leitschaufeln, Wirbelkammern oder Düsen zur Erzeugung eines Dralls oder einer Verwirbelung auf gasförmige Medien eine sehr viel stärkere Wirkung als wie auf Flüssigkeiten ausüben.

Eine weitere oder zusätzliche Alternative ist wenigstens ein Sieb im Mischer, das vom Gemisch durchströmt wird. Die Änderungen der Strömungsrichtungen der jeweiligen Partikel beim Umströmen der Gitterstäbe oder der Stege des Siebes oder beim Durchströmen einer Bohrung bewirkt eine weitere Vermischung.

In allen zuvor beschriebenen Mischeinrichtungen wirkt das strömende Gemisch selbst als Antrieb für die weiteren Vermischungen. Alternativ dazu ist jedoch auch eine Mischeinrichtung mit einem eigenen Antrieb sinnvoll.

Dafür schlägt die Erfindung wenigstens ein rotierendes Messer oder einen anderen Mischkörper vor, der sich etwa senkrecht zur Strömungsrichtung des Gemisches bewegt und dadurch als Mixer wirkt.

Ein solcher aktiver Mischer kann auch als Emulgierzentrifuge gestaltet werden. Dazu strömen beide Medien über den Rand einer mit hoher Drehzahl rotierenden Trommel und prallen mit hoher Geschwindigkeit in radialer Richtung auf eine Wand, wie z.B. die Innenwand des Mischergehäuses.

An den Mischer ist die Vorförderpumpe angeschlossen, die das Gemisch aus Treibstoff und den Drittmedien aus dem Mischer heraus und weiter bis zur Einspritzpumpe fördert. Dabei entlastet sie die Einspritzpumpe und entkoppelt den Mischer vom Verhalten der Einspritzpumpe. Dadurch können Einspritzpumpen verbaut werden, die auch für die alleinige Förderung des Treibstoffes ausgelegt worden sind. Praktische Versuchsreihen haben ergeben, dass die Vorförderpumpe mit Drücken bis zu 100 bar effizient arbeitet.

Als eine weitere alternative Ausführungsform kann zwischen Mischer und Vorförderpumpe ein Behälter angeordnet werden, in dem das Gemisch aus Treibstoff und Drittmedium speicherbar ist. Dadurch wird die Entkopplung zwischen Mischung und Einspritzung verbessert. Im Behälter befindet sich das Gemisch von definierter Zusammensetzung, die während des Betriebes konstant bleibt und unabhängig vom jeweiligen Betriebszustand ist. Von dort aus wird die Einspritzpumpe versorgt wobei der Betriebszustand des Motors bzw. die Motordaten die entsprechende Ansteuerung der Einspritzventile bestimmt und hierdurch die Zusammensetzung des zündfähigen Gemisches in den Verbrennungsräumen bestimmt. Nachdem das in seiner Zusammensetzung definierte Gemisch dem Behälter entnommen und unmittelbar dem Verbrennungsraum hinzugeführt werden kann können auf die sich änderten Betriebsbedingungen unmittelbar reagiert werden. Die Reaktionsträgheit des Motors ist demzufolge sehr gering.

Geeignete Einspritzpumpen sind auf aktuellem Stand der Technik in zahlreichen Varianten bekannt und bewährt. Diese Pumpen müssen natürlich in ihrem Fördervolumen sowie mit ihren Einschaltdauern darauf abgestimmt werden, dass sie nicht puren Treibstoff sondern ein größeres Volumen als Gemisch aus Treibstoff und Wasser oder anderen Drittmedien einspritzen.

Für die Ansteuerung der Einspritzpumpe können aktuell bekannte Verfahren, wie z. B. eine intermittierende Einspritzung für eine noch geräusch- und schadstoffärmere Verbrennung, wie z. B. das Schichtladeprinzip angewandt werden. Bei diesen oder anderen Verfahren können Einspritzdrücke bis zu 1400 bar an den Einspritzdüsen erreicht werden.

Als Einspritzdüse sind z. B. die hinlänglich bekannten Zapfendüsen geeignet. Sie bestehen aus einem in den Verbrennungsraum hineinragenden Metallkegel, in dessen Zentrum sich ein nach innen hin erweiternder Hohlkegel eingebracht ist. In diesen Hohlkegel kann ein dazu komplementär geformter, zweiter und kleinerer Metallkegel - der "Zapfen" - von innen her mehr oder weniger weit hinein geschoben werden und damit den effektiven Querschnitt der Austrittsöffnung ändern, um so die eingespritzte Menge zu dosieren.

Eine andere, sinnvolle Ausführung einer Einspritzdüse ist eine Lochdüse. Praktische Erprobungen haben die besten Ergebnisse mit einer Anzahl von bis zu neun Einspritzbohrungen in der Lochdüse ergeben.

Die Erfindung bevorzugt eine direkte Einspritzung des Gemisches aus Treibstoff und Drittmedium in den Verbrennungsraum. Es ist im Prinzip jedoch nicht ausgeschlossen, eine erfindungsgemäße Einspritzdüse alternativ im Saugrohr eines Verbrennungsmotors anzuordnen.

Wenn als Drittmedium Wasser mit dem Treibstoff vermischt wird, so würde eine Saugrohreinspritzung eine erhöhte Korrosion am Einlassventil und an dessen Sitz bewirken. Außerdem schlägt sich ein Teil des Gemisches am Ventil nieder und wird von dort erst wieder durch die Verbrennungsluft entfernt, sodass es im Verbrennungszyklus vergleichsweise spät im Verbrennungsraum eintrifft, was einer vollständigen, geräuscharmen und möglichst schadstofffreien Bewegung entgegensteht.

Das erfindungsgemäße Prinzip ist für Benzin, Diesel, Schweröl und andere Kohlenwasserstoffgemische ebenso anwendbar wie für die Verbrennung von Pflanzenölen wie z. B. Rapsöl, Jatrovaöl oder Palmöl.

Das dem Treibstoff beigemischte Wasser wird im einfachsten Fall einem dafür spezialisierten Tank entnommen. Bei mobilen Verbrennungsmotoren in Fahrzeugen erhöht sich dadurch jedoch das zu befördernde Gewicht. Deshalb schlägt die Erfindung als eine interessante Alternative vor, zumindest einen Teil des benötigten Wassers durch die Kondensation des Abgases zu gewinnen, da das Abgas nicht nur das in den Verbrennungsraum zusätzlich eingespeiste Wasser enthält, sondern auch das wesentliche Endprodukt der Verbrennung der Treibstoffe Wasser ist. Das aus dieser "Quelle" gewonnene Wasser wird als Drittmedium in den entsprechenden Tank zurückgeführt und von dort aus in den Mischer eingeleitet.

Zur praktischen Erprobung des Prinzips der Erfindung wurde ein Dieselmotor mit verschiedenen Gemischen aus Rapsöl und Wasser betrieben. Als Prüfeinrichtung wurde eine Einheit aus einem Verbrennungsmotor und einem elektrischen Generator vom Typ Genset GF 75 benutzt.

Der elektrische Generator von Stamford aus China, ist für eine Nenndrehzahl von 1.500 min⁻¹ und einer Nennlast von 93,8 kVA/75kW ausgelegt. Er gibt 3 x 400 Volt, 50 Hertz und maximal 135,8 Ampere ab.

Der Verbrennungsmotor der Firma Deutz aus China, Typ TBD226B-6D, mit einem Hubraum von 6231 cm³ und einer Nennleistung von 136 kW bei 1500 min⁻¹ mit einem Turbolader und einer mechanischen Einspritzung, wurde mit Rapsöl einer Dichte von 930 kg/ m³ betrieben. Der thermische Expansionskoeffizient dieses Treibstoffes trägt 1 % pro 10 Grad Celsius bei einer Emulsion von Treibstoff und Wasser. Dabei wurde das Volumen des verbrauchten Treibstoffes bei einer konstanten elektrischen Belastung des Generators gemessen.

Der Versuch wurde bei einer Temperatur bei 18 Grad Celsius und einem Luftdruck von 982 Hektopascal und einer relativen Luftfeuchtigkeit von 51 % durchgeführt.

In der folgenden Tabelle sind 3 Mischungen zwischen Rapsöl und Wasser aufgeführt, nämlich ein Mischungsverhältnis zwischen Rapsöl und Wasser von 1 : 1, 1 : 2 und 1 : 3.

| **Mischungsverhältnis Rapsöl zu Wasser** | **1 : 1** | **1 : 2** | **1 : 3** |
|---|---|---|---|
| Verbrauchsdauer (s) | 360 | 300 | 180 |
| Treibstoffverbrauch (l) | 2,86 | 2,56 | 1,58 |
| Treibstofftemperatur(°C) | 30,0 | 35,7 | 32,7 |
| Gesamtverbrauch (l/h) | 28,3 | 30,3 | 31,1 |
| Rapsölverbrauch (l/h) | 14,15 | 10,09 | 7,79 |
| Dichte (kg/l) | 0,9915 | 0,9943 | 0,9958 |
| Spezifischer Gesamtverbrauch (g/kWh) | 383,3 | 411,2 | 426,0 |
| Spezifischer Verbrauch Rapsöl (g/kWh) | 190,0 | 135,5 | 105,1 |

Aus den Werten der Tabelle ist zu ersehen, dass bei einem Mischungsverhältnis zwischen Rapsöl und Wasser von 1 : 1 der spezifische Verbrauch 190 Gramm pro Kilowattstunde beträgt. Bei einem Mischungsverhältnis von einem Rapsöl auf zwei Teile Wasser sank der spezifische Verbrauch an Rapsöl auf 135,5 Gramm pro kWh, also um knapp 30 %. Bei einer Erhöhung des Mischungsverhältnisses von einem Teil Rapsöl auf drei Teile Wasser sank der spezifische Verbrauch an Rapsöl auf nur 105 Gramm pro kWh, also um gut ein weiteres Viertel.

Oder - als ein anderes Verhältnis ausgedrückt: Es konnte durch die Verdreifachung des Wasseranteils der Kraftstoffverbrauch nahezu halbiert werden. Im Vergleich dazu beträgt beim Betrieb der Testeinheit ohne die Beimischung von Wasser bei gleicher Belastung und unter gleichen sonstigen Bedingungen der Kraftstoffverbrauch bei der Speisung mit Diesel 220 Gramm pro kWh und bei der Speisung mit Rapsöl 240 Gramm pro kWh.

Insbesondere bei der Speisung mit Rapsöl konnte also durch eine Emulsion von einem Teil Rapsöl und drei Teilen Wasser eine Reduktion des Kraftstoffverbrauches um mehr als die Hälfte erzielt werden.

Im Folgenden sollen weitere Einzelheiten und Merkmale der Erfindung anhand von Beispielen näher erläutert werden. Diese sollen die Erfindung jedoch nicht einschränken, sondern nur erläutern. Es zeigt in schematischer Darstellung:

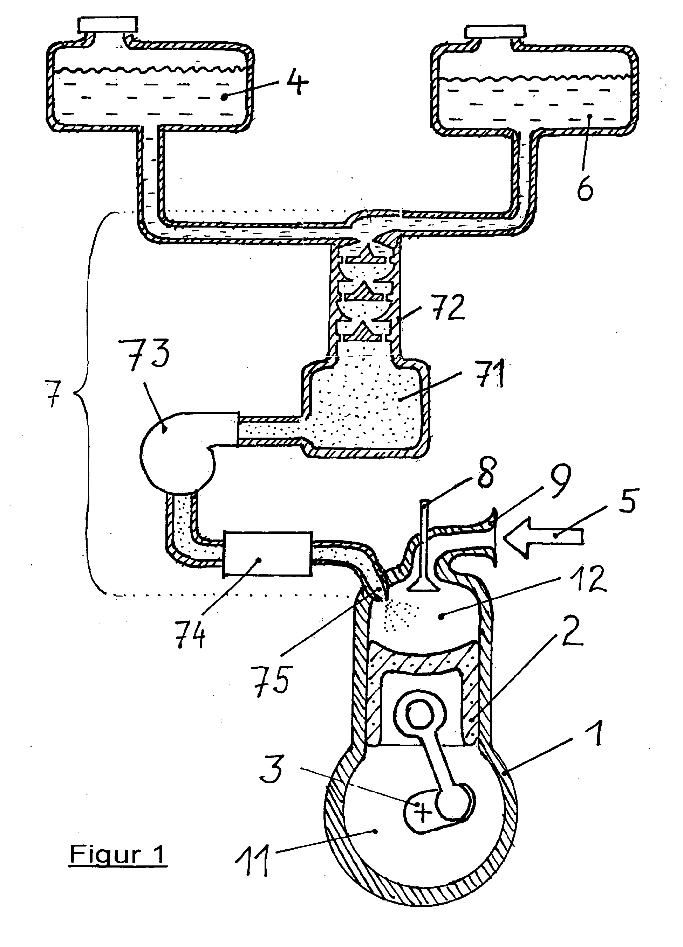

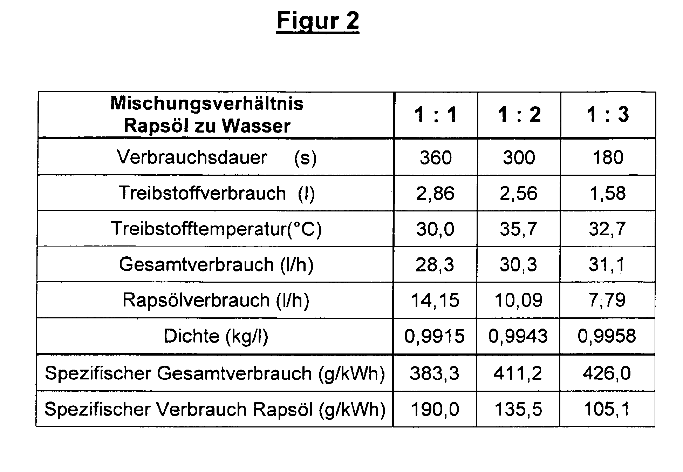

- Figur 1: Schema eines Kolbenmotors mit Speicher und Mischeinrichtung für zwei Medien.

In **Figur 1** ist im Schnitt ein Kolbenmotor dargestellt, der mit einem erfindungsgemäßem Gemisch aus einem Treibstoff 4 und einem Drittmedium 6 als Verbrennungsmotor betrieben wird. Im Motorblock 1 ist in dessen Hohlraum 11 eine Abtriebswelle 3 angeordnet, die senkrecht zur Zeichnungsebene verläuft und mit einem Kurbelzapfen versehen ist, an dem ein Pleuel angelenkt ist, welcher mit einem linear bewegbaren Kolben 2 gelenkig verbunden ist. Die senkrechten Seitenwände des Kolbens 2 sind komplementär zum Hohlraum 11 des Motorblockes 1 geformt.

In Figur 1 ist das bekannte Arbeitsprinzip eines Verbrennungsmotors leicht nachvollziehbar: Bei der Abwärtsbewegung des Kolbens 2 im Hohlraum 11 des Motorblocks 1 vergrößert sich der Verbrennungsraum 12, wodurch bei geöffnetem Einlassventil 8 durch den Luftansaug 9 Luft 5 von außen angesaugt wird. Gleichzeitig wird durch die Einspritzdüse 75 ein Gemisch aus dem Treibstoff 4 und dem Drittmedium 6, z. B. Wasser, in den Verbrennungsraum 12 eingespritzt.

Wenn der Kolben 2 seinen unteren Totpunkt erreicht hat, schließt das Einlassventil 8. Der Kolben 2 bewegt sich dann wieder nach oben und verdichtet das angesaugte Gemisch, sodass es sich beim Dieselmotor oder bei der Verbrennung von Pflanzenölen ab einer gewissen Verdichtung selbst entzündet. Beim Ottomotor wird es durch eine Fremdzündung zur Explosion gebracht.

Dadurch expandiert das heiße Verbrennungsgas und treibt den Kolben in die nächste, nach unten gerichtete Abwärtsbewegung. Während dieser Phase arbeitet der Kolben und gibt an die Abtriebswelle 3 Energie ab. Bei der nächsten Aufwärtsbewegung wird das - hier nicht dargestellte - Auslassventil geöffnet und das abgekühlte Verbrennungsgas ausgestoßen.

Die hier gezeigte Ausführungsform des Verbrennungsmotors ist ein Viertakter, der nur bei jeder zweiten Abwärtsbewegung Arbeit leistet. Das erfindungsgemäße Prinzip der Gemischaufbereitung ist jedoch auch bei einem - hier nicht dargestellten - Zweitaktmotor mit einer Steuerung des Auslassens und des Einlassens des Gemisches durch Schlitze in der Wand des Verbrennungsraumes 12 anwendbar. Figur 1 zeigt in der oberen Hälfte die Kernidee der Erfindung, nämlich die Vermischung des Treibstoffes 4 und wenigstens eines Drittmediums 6 schon außerhalb des Verbrennungsraumes 12. Dazu wird in dem oben links dargestellten Tank der Treibstoff 4 und in dem Tank oben rechts ein Drittmedium 6, z. B. Wasser, bereitgestellt. Von beiden Tanks führen Leitungen zum Mischer 72.

Er besteht in der hier dargestellten Ausführungsform aus einer kleinen Wirbelkammer in der für eine erste, grobe Vermischung der beiden Medien das Drittmedium 6 verwirbelt wird und quer zu seiner Einströmrichtung mit dem Treibstoff 4 vermengt wird.

Von dort strömt das Grobgemisch durch eine düsenartige Verengung auf eine Prallplatte mit einem Kegel in ihrer Mitte, von der es abprallt und durch zahlreiche, kleinere Öffnungen am äußeren Umfang der Prallplatte oder durch einen um den äußeren Umfang herum verlaufenden Schlitz strömt, wobei sich beide Medien innig miteinander vermischen.

Nicht in Figur 1 dargestellt ist, dass die Austritte der Öffnungen ebenfalls als eine Düse geformt sind, von der aus das austretende Gemisch auf eine Prallfläche auftrifft. Auch wenn die Öffnungen jeweils nur eine Bohrung mit einem über ihre Länge hinweg gleichmäßigen Querschnitt sind, wird das Gemisch beim Austreten und beim Aufprall auf eine folgende Fläche weiter verfeinert. Diese Prallfläche ist in Figur 1 als eine kegelartige Einschnürung des Mischers dargestellt.

Die in Figur 1 dargestellte Ausführungsform zeigt insgesamt drei kaskadisch hintereinander geschaltete Prallplatten.

Praktische Versuche mit einer derartigen Anordnung haben gezeigt, dass sich in jeder Stufe die im Treibstoff 4 emulgierten Wassertröpfchen als Drittmedium 6 weiter verkleinern und sich ihre Anzahl erhöht.

Bei der in Figur 1 gezeigten Ausführungsvariante tritt das Gemisch vom Mischer 72 in den optionalen Behälter 71 ein. Dieser Behälter 71 ist - wie in Figur 1 dargestellt - im Verhältnis relativ klein, da er nur eine begrenzte Menge des Gemisches aus Treibstoff 4 und Drittmedium 6 enthält. Der Vorteil dieser kleinen Zwischenlagermenge ist, dass die nicht allzu lange stabile Emulsion aus Treibstoff 4 und Wasser nur für eine sehr kurze Zeit im Behälter 71 verweilt und alsbald wieder austritt.

Die im Treibstoff 4 enthaltenen kleinen Tröpfchen des Drittmediums 6 - z.B. Wasser - sind so klein, dass die Darstellung in Figur 1 als Punkt zu groß ist und deshalb nur als unmaßstäbliche Symbolisierung zu verstehen ist.

Eine wesentliche Funktion des Behälters 72 ist die Entkopplung des Mischers 72 von der Vorförderpumpe 73. Die Vorförderpumpe 73 saugt das Gemisch aus dem Behälter 71 an und drückt es durch eine Metallleitung zur Einspritzpumpe 74.

Derartige Pumpen 74 für die Injektion von Kraftstoffen sind - wie bereits erwähnt -seit längerem bekannte und bewährt. Sie müssen hier lediglich für das durch die Beimischung des Drittmediums 6 vergrößerte Volumen dimensioniert werden. Die Einspritzpumpe 74 drückt das Gemisch durch die Einspritzdüse 75 in den Verbrennungsraum 12.

Die in Figur 1 gezeigte Ausführungsform ist ein sog. "Direkteinspritzer", bei dem das zündfähige Gemisch durch die Einspritzdüse 75 direkt in den Verbrennungsraum 12 eingespritzt wird. Die Erfindung bevorzugt diese Ausführungsform.

Das erfindungsgemäße Prinzip ist jedoch auch bei einer sog. "Saugrohreinspritzung" anwendbar, bei der das zündfähige Gemisch auf der äußeren Seite des Einlassventils 8 in den Luftansaug 9 eingespritzt wird.

### Bezugszeichenliste

- 1: Motorblock
- 11: Hohlraum im Motorblock 1
- 2: Kolben im Hohlraum 11
- 3: Abtriebswelle im Hohlraum 11
- 4: Treibstoff zur Verbrennung im Verbrennungsraum 12
- 5: Luft zur Verbrennung im Verbrennungsraum 12
- 6: Drittmedium zur Verbesserung der Verbrennung im Verbrennungsraum 12
- 7: Gemischaufbereitung
- 71: Behälter für Emulsion aus Treibstoff 4 und Drittmedium 6
- 72: Mischer zur Vermischung von Treibstoff 4 und Drittmedium 6
- 73: Vorförderpumpe für Emulsion aus Treibstoff 4 und Drittmedium 6
- 74: Einspritzpumpe
- 75: Einspritzdüse
- 8: Einlassventil des Verbrennungsmotors
- 9: Luftansaug in Verbrennungsraum 12

## Patentansprüche

1. Verbrennungsmotor, bestehend aus
- einem Motorblock 1 mit wenigstens einem Hohlraum 11, in dem
- je ein dazu teilweise komplementär geformter Kolben 2 bewegbar angeordnet ist,
- der mit einer drehbaren Abtriebswelle 3 mechanisch verbunden ist und
- der während seiner Bewegung einen Teil des Hohlraums 11, den Verbrennungsraum 12, zyklisch vergrößert und verkleinert,
wobei in den Verbrennungsraum 12 ein zündfähiges Gemisch aus einem Treibstoff 4 und Luft 5 und wenigstens einem Drittmedium 6 einbringbar, verdichtbar, zündbar und nach der Verbrennung wieder ausstoßbar ist,
**dadurch gekennzeichnet, dass**
- der Treibstoff 4 und die Drittmedien 6 in einem Mischer 72 innig miteinander vermischbar sind und
- das entstandene Gemisch
- von einer Vorförderpumpe 73 ansaugbar ist und
- einer Einspritzpumpe 74 zuführbar ist,
- von der es durch wenigstens eine Einspritzdüse 75 in den Verbrennungsraum 12 einspritzbar ist.

2. Verbrennungsmotor nach Anspruch 1, **dadurch gekennzeichnet, dass** ein Drittmedium 6 Wasser ist.

3. Verbrennungsmotor nach einem der vorhergehenden Ansprüche, **dadurch gekennzeichnet, dass** im Mischer 72 eine Prallplatte, z.B. in Form eines Kegels, angeordnet ist, auf welche der Treibstoff 4 und die Drittmedien 6 aufprallen und miteinander eine Emulsion bilden.

4. Verbrennungsmotor nach einem der vorhergehenden Ansprüche, **dadurch gekennzeichnet, dass** der Treibstoff 4 und/oder das Drittmedium 6 unter Druck in den Mischer 72 gepresst werden.

5. Verbrennungsmotor nach Anspruch 4, **dadurch gekennzeichnet, dass** der Mischer 72 für die Zuführung eines Mediums eine Leitung enthält, die sich auf zahlreiche kleine Leitungen verzweigt, die jeweils einzeln in die Leitung des anderen Mediums eingespeist werden, wobei die Eintrittsstellen dieser Einzelleitungen in die Leitung für das zweite Medium gleichmäßig über deren Umfang verteilt sein können.

6. Verbrennungsmotor nach einem der vorhergehenden Ansprüche, **dadurch gekennzeichnet, dass**
- der Treibstoff 4 und/oder
- das Drittmedium 6
erwärmt oder erhitzt werden, bevor sie in den Mischer 72 gepresst werden.

7. Verbrennungsmotor nach Anspruch 6, **dadurch gekennzeichnet, dass** die Temperatur bis zu 180 Grad Celsius beträgt.

8. Verbrennungsmotor nach einem der vorhergehenden Ansprüche 7 oder 8, **dadurch gekennzeichnet, dass** sein Kühlmedium oder sein Abgas zur Vorwärmung des Treibstoffes 4 und/oder des Drittmediums 6 verwendbar ist.

9. Verbrennungsmotor nach einem der vorhergehenden Ansprüche, **dadurch gekennzeichnet, dass** der Mischer 72
- eine Düse ist, aus der das Gemisch auf einen Verteilkegel gesprüht wird, an dessen Fuß zahlreiche Öffnungen angeordnet sind oder
- wenigstens ein Sieb ist oder
- wenigstens ein rotierendes Messer oder ein anderer Mischkörper ist, der sich etwa senkrecht zur Strömungsrichtung des Gemisches aus Treibstoff 4 und Drittmedien 6 bewegt.

10. Verbrennungsmotor nach einem der vorhergehenden Ansprüche, **dadurch gekennzeichnet, dass** der Mischer 72 eine Emulgierzentrifuge ist, bei der der Treibstoff 4 und das Drittmedium 6 über den Rand einer mit hoher Drehzahl rotierenden Trommel strömen und in radialer Richtung auf eine Wand, wie z.B. die Innenwand des Mischergehäuses aufprallen.

11. Verbrennungsmotor nach einem der vorhergehenden Ansprüche, **dadurch gekennzeichnet, dass** zwischen Mischer 72 und Vorförderpumpe ein Behälter 71 angeordnet ist, in dem das Gemisch aus Treibstoff 4 und Drittmedium 6 speicherbar ist.

12. Verbrennungsmotor nach einem der vorhergehenden Ansprüche, **dadurch gekennzeichnet, dass** das Gemisch aus Treibstoff 4 und Drittmedien 6 von der Vorförderpumpe 73 mit einem Druck von bis zu 100 bar zur Einspritzpumpe 74 beförderbar ist.

13. Verbrennungsmotor nach einem der vorhergehenden Ansprüche, **dadurch gekennzeichnet, dass** das Gemisch aus Treibstoff 4 und Drittmedien 6 von der Einspritzpumpe 74 mit einem Druck von bis zu 1400 bar in die Einspritzdüsen 75 pressbar ist.

14. Verbrennungsmotor nach einem der vorhergehenden Ansprüche, **dadurch gekennzeichnet, dass** wenigstens eine Einspritzdüse 75
- eine Zapfendüse oder
- eine Lochdüse ist, wobei die Lochdüse vorzugsweise bis zu neun Einspritzbohrungen aufweist.

15. Verbrennungsmotor nach einem der vorhergehenden Ansprüche, **dadurch gekennzeichnet, dass** das Gemisch aus Treibstoff 4 und Drittmedien 6 von den Einspritzdüsen 75 direkt in den Verbrennungsraum 12 einspritzbar ist.

16. Verbrennungsmotor nach einem der vorhergehenden Ansprüche, **dadurch gekennzeichnet, dass** der Treibstoff 4
- Rapsöl, Jatrophaöl, Palmöl oder ein anderes Pflanzenöl und/oder
- Schweröl, Benzin, Diesel oder ein anderes Kohlenwasserstoffgemisch
ist.

17. Verbrennungsmotor nach einem der vorhergehenden Ansprüche, **dadurch gekennzeichnet, dass** aus seinem kondensierten Abgas Wasser entnehmbar ist, das als Drittmedium 6 in den Mischer 72 rückführbar ist.
